# FASCICULE DE BREVET EUROPEEN

(11) **EP 2 583 344 B1**
(45) Date de publication et mention de la délivrance du brevet: **04.03.2015**
(21) Numéro de dépôt: 11728316.8
(22) Date de dépôt: 31.05.2011
(51) Int. Cl.: H01M 4/66, H01M 10/052, H01M 10/0585, H01M 6/40, H01M 4/38, H01M 4/485, H01M 4/505, H01M 4/525, H01M 4/58, H01M 10/04, H01M 10/0562

(54) **MICROBATTERIE ET PROCÉDÉ DE FABRICATION D'UNE MICROBATTERIE**
MIKROBATTERIE UND VERFAHREN ZUR HERSTELLUNG EINER MIKROBATTERIE
MICROBATTERY AND METHOD FOR MANUFACTURING A MICROBATTERY

(30) Priorité: 21.06.2010 FR 1002598
(43) Date de publication de la demande: 24.04.2013
(73) Titulaire: Commissariat à l'Énergie Atomique et aux Énergies Alternatives, 75015 Paris (FR)
(72) Inventeur: OUKASSI, Sami, F-38120 Saint-Egrève (FR); DUNOYER, Nicolas, F-38000 Grenoble (FR); SALOT, Raphaël, F-38250 Lans-en-Vercors (FR)
(74) Mandataire: Talbot, Alexandre
(86) Numéro de dépôt international: PCT/FR2011/000322
(87) Numéro de publication internationale: WO 2011/161330

(56) Documents cités:
- FR-A1- 2 901 639
- microbonding sa: "Flip Chip Bonding", , 21 juin 2009 (2009-06-21), XP002663045, Extrait de l'Internet: URL:http://www.microbonding.com/fr/fc_fr.h tm [extrait le 2011-11-08]

## Description

### Domaine technique de l'invention

L'invention concerne une microbatterie comportant un ensemble de couches minces formant, successivement, à partir d'un premier substrat, un premier collecteur de courant, une première électrode, un électrolyte, une seconde électrode et un second collecteur de courant.

L'invention concerne également un procédé de fabrication d'une microbatterie.

### État de la technique

Les microbatteries, également appelées batteries "tout solide", sont constituées par un empilement actif formé de couches minces solides. Le principe de fonctionnement de ces microbatteries repose sur l'insertion et la désinsertion encore appelées intercalation-désintercalation d'un ion de métal alcalin ou d'un proton dans au moins une électrode. Les principaux systèmes utilisent comme espèce ionique, le cation lithium (Li⁺). En effet, les microbatteries au lithium sont particulièrement intéressantes du fait de leur forte densité massique, leur surface de stockage utile d'énergie élevée et leur faible toxicité.

Afin de protéger l'empilement actif de la microbatterie, une encapsulation est généralement réalisée afin d'isoler l'empilement du contact extérieur et d'éviter ainsi toute contamination provenant de l'environnement.

Les microbatteries trouvent de nombreuses applications industrielles notamment dans le domaine de la microélectronique où la miniaturisation des composants et les besoins en autonomie imposent l'utilisation d'accumulateurs plus petits, plus puissants et ayant des durées de vie plus longues.

L'amélioration des performances des microbatteries et des procédés de fabrication de telles microbatteries constitue un enjeu majeur dans le domaine de l'électronique, notamment pour l'alimentation des composants électroniques de circuits intégrés comme les cartes à puces, les étiquettes intelligentes ou l'alimentation d'horloges internes et de microsystèmes. Ces applications imposent, en particulier, que toutes les étapes de fabrication de la microbatterie soient compatibles avec les procédés industriels de la microélectronique, pour pouvoir facilement les intégrer aux dispositifs électroniques et, en particulier, en évitant toute dégradation des composants électroniques des circuits intégrés.

Pour répondre aux besoins de la microélectronique, de nombreux procédés de fabrication de microbatteries ont été proposés dans la littérature.

En particulier, les documents US-A-20040258984 et US-B-6650000 proposent de réaliser une microbatterie sur le même substrat utilisé pour les composants électroniques d'un circuit intégré, comme des microsystèmes électromécaniques (MEMs), des diodes électroluminescentes ou des transistors. Les procédés de fabrication permettent ainsi d'intégrer la microbatterie et un circuit intégré dans un même substrat. Certaines étapes de fabrication de la microbatterie et des composants sont communes. Cette approche monolithique est communément appelée "système sur puce" ou "système mono-puce" (en anglais "system on chip", SOC). Le SOC regroupe sur un même substrat des composants fabriqués collectivement par co-intégration de différentes étapes de fabrication des composants. Ainsi, cette approche présente l'avantage de gagner de la place et de favoriser la miniaturisation des dispositifs. Par ailleurs, l'intégration de la microbatterie améliore la fiabilité et les performances des composants et de la microbatterie tout en réduisant les coûts de fabrication du système comparativement à un dispositif électronique alimenté par une batterie externe.

En particulier, le document US-A-20040258984 décrit la fabrication d'une microbatterie comportant une électrode contenant du lithium, un électrolyte en oxyde de silicium (SiO₂) et une contre-électrode selon des techniques empruntées au domaine de la microélectronique comme la photolithographie et la gravure.

Le document US-A-20020093029 divulgue une microbatterie dans un circuit intégré réalisée directement au niveau des interconnexions relatives aux circuits intégrés, dessous un ou plusieurs composants électroniques.

Néanmoins, cette approche monolithique est contraignante car elle impose des rendements technologiques très élevés et des volumes de production importants, pour amortir le coût de la co-intégration. En outre, le dimensionnement et, plus largement, l'architecture de la microbatterie sont imposés par la co-intégration. Or, il est connu que le dimensionnement de la microbatterie a une influence sur les propriétés intrinsèques de la microbatterie, en particulier, sur sa capacité. Cette approche limite, par conséquent, le choix d'architecture et la gamme de dimensionnement de la microbatterie.

Par ailleurs, le document US-A-2007275300 décrit un microcomposant comportant des premier et second substrats solidarisés ensemble par l'intermédiaire de moyens d'étanchéité. Les moyens d'étanchéité sont constitués par un film anisotrope conducteur ACF, de type polymère, c'est-à-dire un film permettant une conduction électrique verticale par rapport au plan du film et une isolation électrique dans le plan du film.

### Objet de l'invention

L'objet de l'invention a pour but de réaliser une microbatterie et un procédé de fabrication d'une microbatterie remédiant aux inconvénients de l'art antérieur.

En particulier, l'invention a pour but une microbatterie ayant de bonnes performances électriques et un procédé de fabrication d'une microbatterie facile à mettre en oeuvre, économiquement viable et compatible avec les technologies mises en oeuvre dans le domaine de la microélectronique.

Selon l'invention, ce but est atteint par le fait que l'ensemble de couches minces est disposé entre le premier substrat et un second substrat et par le fait que la seconde électrode est constituée par un joint brasé et assure la connexion mécanique entre lesdits premier et second substrats.

Selon l'invention, ce but est également atteint par un procédé de fabrication d'une microbatterie qui comporte les étapes suivantes :
- formation d'un empilement de couches minces sur un premier substrat comportant, successivement à partir du premier substrat, un premier collecteur de courant, une première électrode, un électrolyte et une première couche métallique,
- formation d'un second collecteur de courant sur une face d'un second substrat et,
- formation d'une seconde électrode, ladite étape de formation de la seconde électrode comportant l'assemblage desdits premier et second substrats par brasage de la première couche métallique et du second collecteur de courant au moyen d'au moins une bille de soudure préalablement déposée sur une face de contact de la première couche métallique ou sur une face de contact du second collecteur de courant, lesdits premier et second substrats étant disposés en vis-à-vis lors de l'assemblage.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
Les figures 1 à 4 représentent, schématiquement et en coupe, différentes étapes d'un procédé de fabrication d'une microbatterie selon un premier mode de réalisation particulier de l'invention.
La figure 5 représente, schématiquement et en coupe, une variante du procédé de fabrication selon le premier mode de réalisation particulier de l'invention.
Les figures 6 à 8 représentent, schématiquement et en coupe, différentes étapes d'un procédé de fabrication d'une microbatterie selon un second mode de réalisation particulier de l'invention.

### Description de modes particuliers de réalisation.

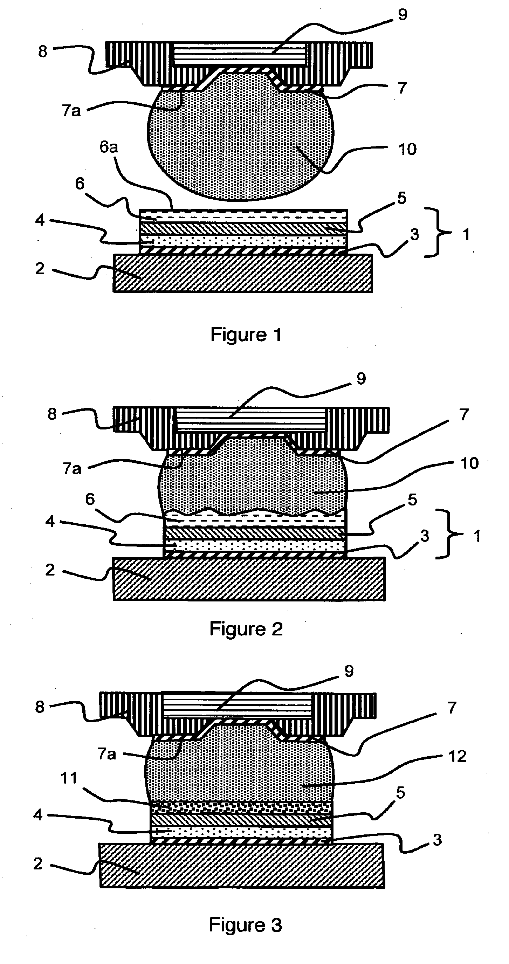

Selon un premier mode de réalisation représenté aux figures 1 à 4, un procédé de fabrication d'une microbatterie comporte la formation selon tout procédé connu d'un empilement 1 de couches minces sur un premier substrat 2. En particulier, les couches minces de la microbatterie sont déposées successivement sur le premier substrat 2 par des techniques conventionnelles de l'industrie de la microélectronique notamment par dépôt physique en phase vapeur ("physical vapor deposition", PVD), dépôt chimique en phase vapeur ("chemical vapor deposition", CVD). L'épaisseur des couches minces varie, typiquement, entre 0,1 µm et 10 µm.

Comme représenté à la figure 1, en partant du premier substrat 2, l'empilement 1 est constitué, successivement, par un premier collecteur de courant 3, une première électrode 4, un électrolyte 5 et une première couche métallique 6.

Le premier substrat 2 est, classiquement, une plaque en silicium ou une plaque en silicium contenant un circuit intégré à la demande, également appelée circuit ASIC ("Application Specific Integrated Circuit"). Le premier substrat 2 peut également être recouvert par une couche de passivation (non représentée) disposée sous le premier collecteur de courant 3. La couche de passivation est typiquement constituée par un diélectrique comme le dioxyde de silicium (SiO₂) ou par une bicouche constituée successivement d'une couche de SiO₂ et d'une couche de nitrure de silicium (Si₃N₄).

Le premier collecteur de courant 3 est classiquement métallique, par exemple en platine (Pt), chrome, (Cr), or (Au), titane (Ti), tungstène (W), molybdène (Mo), nickel (Ni) ou vanadium (V).

La première électrode 4 est génératrice d'ions Li⁺ soit comporte un matériau actif d'intercalation du lithium. Les matériaux utilisés comme matériaux actifs de la première électrode 4 peuvent être soit des matériaux non lithiés comme, par exemple, les sulfures ou disulfures de cuivre (Cu ou CuS₂), les oxysulfures de tungstène (WO_{y}S_{z}), les disulfures de titane (TiS₂), les oxysulfures de titane (TiOₓS_{y}) ou les oxydes de vanadium (VₓO_{y}) soit des matériaux lithiés comme, par exemple, les oxydes mixtes à base de lithium tels que l'oxyde de lithium et de cobalt (LiCoO₂), l'oxyde de lithium et de nickel (LiNiO₂), l'oxyde de lithium et de manganèse (LiMn₂O₄), le pentoxyde de lithium et de vanadium (LiV₂O₅) ou le phosphate de lithium et de fer (LiFePO₄ ).

L'électrolyte 5 est constitué par un matériau permettant la conduction des ions, de préférence, des ions lithium Li⁺. On choisira, de préférence, des matériaux isolants électriquement et conducteurs ioniques. L'électrolyte 5 est, de préférence, un composé à base de lithium tel qu'un oxynitrure de phosphore et de lithium (LiPON) ou un oxynitrure de phosphosilicate de lithium (LiSiPON).

Comme représenté à la figure 1, le procédé de fabrication comporte également une étape de formation d'un second collecteur de courant 7 sur une face d'un second substrat 8. Cette étape est réalisée indépendamment de l'étape de formation de l'empilement 1 décrite ci-dessus c'est-à-dire avant, pendant ou après l'étape de formation de l'empilement 1.

Le second substrat 8 est distinct et indépendant du premier substrat 2. Le second substrat 8 comporte, de préférence, au moins un composant électronique 9 destiné à être connecté électriquement à la microbatterie. Le second substrat 8 peut être, comme le premier substrat 2, formé par une plaque en silicium ou une plaque en silicium contenant un ou plusieurs composants électroniques d'un circuit intégré. Le second substrat 8 comporte, éventuellement, une couche de passivation (non représentée) située entre le second substrat 8 et le second collecteur de courant 7.

Une bille de soudure 10 est ensuite déposée sur une face de contact 7a du second collecteur de courant 7. La bille de soudure 10 est réalisée sur le second collecteur de courant 7, selon tout procédé connu (figure 1), de manière à former une proéminence ou bosse à la surface du second substrat 8 (figure 1).

Le second collecteur de courant 7 présente, avantageusement, une bonne adhérence au second substrat 8, une bonne mouillabilité par rapport aux matériaux constituant la bille de soudure 10 et de faibles contraintes mécaniques internes.

Le second collecteur de courant 7 comporte, de préférence, une seconde couche métallique munie de la face de contact 7a sur laquelle est formée la bille de soudure 10.

La seconde couche métallique est, avantageusement, différente de la première couche métallique 6, pour éviter toute inter-diffusion d'espèces métalliques entre la bille de soudure 10 et la seconde couche métallique.

La seconde couche métallique constitue une couche métallisée dite UBM pour l'expression anglo-saxonne « Under Bump Metallization », favorisant l'adhérence de la bille de soudure 10 sur le second substrat 8 ou la couche de passivation du second substrat 8. En outre, la seconde couche métallique constitue, de préférence, une barrière de diffusion des espèces mises en jeu lors des réactions électrochimiques dans la microbatterie, en particulier, vis-à-vis des ions Li⁺.

La seconde couche métallique est, de préférence, constituée par un ou plusieurs métaux choisis parmi Pt, Cr, Au, Ti, W, Mo, Ni ou V et leurs alliages.

La seconde couche métallique peut, éventuellement, être une multi-couche constituée de plusieurs couches métalliques superposées les unes sur les autres afin d'obtenir des propriétés mécaniques appropriées.

Comme représenté à la figure 1, le second collecteur de courant 7 peut uniquement être constitué par la seconde couche métallique.

Dans l'empilement 1, la première couche métallique 6 est, de préférence, constituée par un métal choisi parmi le cuivre, l'étain et un alliage cuivre-étain.

Alternativement, la première couche métallique 6 peut être constituée par un empilement de couches à base de métaux. Une des couches de l'empilement est munie d'une face de contact 6a (face en haut à la figure 1), destinée à être en contact avec la bille de soudure 10 et est constituée par un métal choisi parmi le cuivre, l'étain et un alliage cuivre-étain.

La bille de soudure 10 est constituée par un matériau différent du matériau de la première couche métallique 6.

La bille de soudure 10 est constituée par un matériau conducteur électrique choisi, avantageusement, parmi les alliages d'étain (Sn), d'argent (Ag), d'indium (In), d'or (Au) et/ou de cuivre (Cu), de préférence, parmi les alliages SnAgCu, AuSn, SnCu et Agln.

L'étape ultérieure du procédé de fabrication d'une microbatterie consiste à former une seconde électrode 11. Cette étape comprend l'assemblage des premier et second substrats, respectivement, 2 et 8, par brasage de la première couche métallique 6 et du second collecteur de courant 7, au moyen d'au moins la bille de soudure 10. On entend par assemblage, un assemblage permanent qui assure, en outre, le lien mécanique entre les premier et second substrats, respectivement 2 et 8.

L'assemblage mécanique utilisé est similaire à une connexion connue sous la dénomination anglaise "Flip-Chip" ou "puce retournée" en français, dans laquelle les surfaces à connecter sont assemblées face-à-face et non, côte à côte, comme pour une connexion classique par fil (en anglais "wire bonding"). Cet assemblage est remarquable en ce qu'il optimise l'encombrement et ne nécessite pas de réserver une surface supplémentaire du second substrat 8 pour la connexion.

Les premier et second substrats, respectivement 2 et 8, sont disposés en vis-à-vis lors de l'assemblage, de manière à mettre en contact la bille de soudure 10 avec la première couche métallique 6.

Ainsi, la bille de soudure 10 du second substrat 8 est placée en regard de l'empilement 1 du premier substrat 2 de sorte que la bille de soudure 10 est positionnée face à la première couche métallique 6.

Comme représenté aux figures 2 et 3, une étape de refusion de la bille de soudure 10 est réalisée simultanément à la mise en contact. L'étape de refusion est, de préférence, un traitement thermique. Le traitement thermique peut être réalisé en utilisant un four à refusion.

Comme représenté à la figure 2, la refusion provoque initialement l'interdiffusion d'espèces métalliques de la bille de soudure 10 et de la première couche métallique 6, au niveau de leur interface. On entend par espèces métalliques, des éléments métalliques chargés ou non chargés, par exemple sous forme de composés intermétalliques.

La refusion de la bille de soudure 10 favorise la migration des espèces métalliques de la bille de soudure 10 dans la première couche métallique 6.

Le traitement thermique et la migration des espèces métalliques induisent des réactions chimiques à l'interface entre la bille de soudure 10 et la première couche métallique 6, pour former de nouveaux composés intermétalliques.

Comme représenté à la figure 3, les réactions interfaciales forment une couche intermétallique à l'interface entre la bille de soudure 10 et la première couche métallique 6 qui constitue alors la seconde électrode 11.

Ainsi, la seconde électrode 11 est formée au cours de l'étape d'assemblage par refusion de la bille de soudure 10. La seconde électrode 11 est constituée par un joint brasé formé par au moins un composé intermétallique issu de l'inter-diffusion des espèces métalliques de la bille de soudure 10 et de la première couche métallique 6.

La bille de soudure 10 peut être partiellement consommée lors de cette étape d'assemblage de manière à former la seconde électrode 11 et une couche conductrice électrique 12 entre le second collecteur de courant 7 et la seconde électrode 11. La couche conductrice électrique 12 est alors constituée par la partie de la bille de soudure 10 n'ayant pas réagi avec la première couche métallique 6.

La couche conductrice électrique 12 est constituée par le même matériau que la bille de soudure 10.

En outre, le joint brasé formant la seconde électrode 11 assure la connexion mécanique entre les premier et second substrats, respectivement 2 et 8.

L'étape de brasage permet ainsi de former la seconde électrode 11 et d'assembler les premier et second substrats, respectivement 2 et 8.

Les paramètres du traitement thermique dépendent de la nature des matériaux de la première couche métallique 6, du second collecteur de courant 7 et de la bille de soudure 10. En particulier, la durée du palier en température est déterminée en fonction de l'épaisseur de la seconde électrode 11 désirée. Les paramètres du traitement thermique de l'étape de brasage, notamment la durée de traitement thermique, permettent de contrôler l'épaisseur de la couche intermétallique formée.

À titre d'exemple, on peut utiliser une première couche métallique 6 en cuivre et une bille de soudure 10 en l'alliage SnAgCu. L'alliage SnAgCu correspond à une structure eutectique connue comportant 95,5%Sn, 3,8%Ag et 0,7%Cu et formée par les composés intermétalliques Cu₆Sn₅ et Ag₃Sn dispersés dans une matrice Sn.

Le traitement thermique peut être réalisé à une température comprise entre 170°C et 260°C, avec une durée du palier en température comprise entre 1 min et 5min. Le traitement thermique peut également comporter plusieurs paliers en température, entre 170°C et 260°C.

Comme montré par Fouassier et al. dans l'article "Conception of a consumable copper reaction zone for a NiTi/SnAgCu composite material" (Composites, Part A 33 (2002) 1391-1395), une couche intermétallique Sn-Cu est obtenue par refusion de l'alliage SnAgCu sur une couche de cuivre.

En outre, Fouassier et al. montre que la composition et l'épaisseur de la couche intermétallique Sn-Cu dépendent, en particulier, de la durée du palier de température, à température constante.

La seconde électrode 11 est formée par au moins un composé intermétallique de cuivre et d'étain résultant de l'inter-diffusion entre la bille de soudure 10 et la première couche métallique 6. En particulier, la seconde électrode 11 est constituée par les composés intermétalliques Cu₆Sn₅ et/ou Cu₃Sn qui se révèlent être actifs comme matériaux pour électrode de microbatterie et qui sont présentés dans l'état de l'art comme une alternative prometteuse aux matériaux conventionnels d'insertion au lithium.

En effet, dans l'article "Electrodeposition of Sn-Cu alloy anodes for lithium batteries" Weihua et al.décrit des travaux portant sur une électrode en alliage Sn-Cu. Weihua et al. révèle qu'une électrode formée à partir de composés intermétalliques Sn-Cu présente de bonnes performances, notamment, en matière de capacités de charge et de décharge ainsi qu'en matière de tenue en cyclage.

Le procédé de fabrication décrit ci-dessus permet ainsi d'obtenir une microbatterie comportant un ensemble de couches minces disposé entre les premier et second substrats, respectivement 2 et 8, formant successivement à partir d'un premier substrat 2, un premier collecteur de courant 3, une première électrode 4, un électrolyte 5, une seconde électrode 11 constituée par le joint brasé et un second collecteur de courant 7 (figure 3).

La microbatterie peut, également, comporter une couche conductrice électrique 12 entre la seconde électrode 11 et le second collecteur de courant 7.

Le second collecteur de courant 7, avantageusement, constitué par la seconde couche métallique, permet de connecter électriquement le composant électronique 9 intégré dans le second substrat 8.

La seconde électrode 11 assure la connexion mécanique entre les premier et second substrats, respectivement 2 et 8.

La seconde électrode 11 formée à partir d'au moins un composé intermétallique présente une expansion volumique réduite et assure la tenue mécanique de la microbatterie.

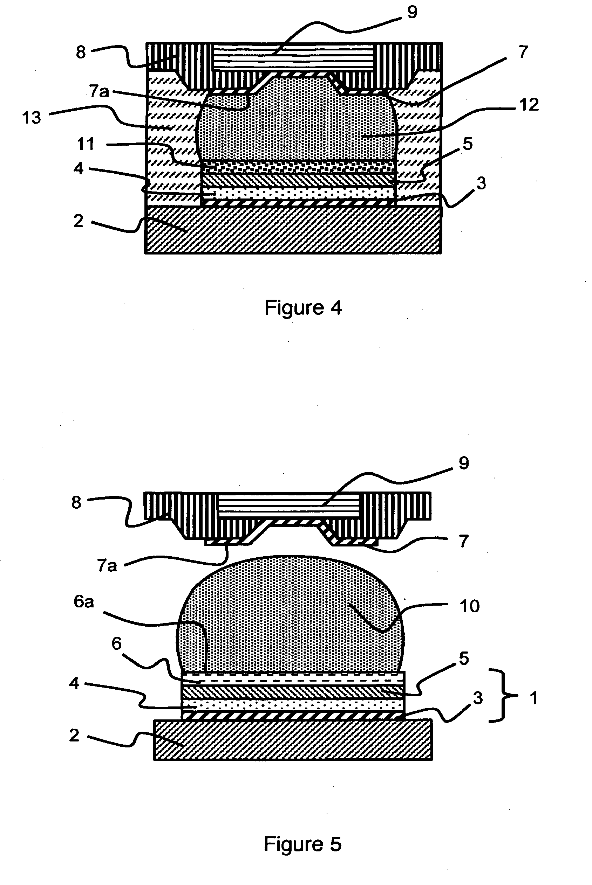

Comme représenté à la figure 4, l'étape de formation de la seconde électrode 11 est suivie d'une étape d'encapsulation de la microbatterie selon tout procédé connu. La microbatterie est encapsulée par une couche d'encapsulation 13 inerte vis-à-vis des éléments constitutifs de la microbatterie. La couche d'encapsulation 13 est destinée à rendre la microbatterie étanche et à la protéger contre les contaminations externes. La couche d'encapsulation 13 est composée d'une résine d'encapsulation des semi-conducteurs ou d'une résine dite "underfill", utilisée pour les connexions de type "Flip-Chip".

La couche d'encapsulation 13 est formée, de préférence, par une résine composite à base d'époxyde, chargée par des grains de silice amorphe. L'inclusion de silice amorphe dans ce type de résine entraîne un accroissement de leur rigidité globale, une diminution du coefficient de dilatation thermique et une plus grande résistance à la formation d'humidité interne.

Selon une variante représentée à la figure 5, le procédé de fabrication diffère du premier mode de réalisation particulier en ce que la bille de soudure 10 est déposée, préalablement à l'étape d'assemblage, sur la face de contact 6a de la première couche métallique 6 au lieu de la face de contact 7a du second collecteur de courant 7.

L'assemblage des premier et second substrats, respectivement 2 et 8, est alors réalisé par mise en contact de la bille de soudure 10 avec la face de contact 7a du second collecteur de courant 7 et refusion de la bille de soudure 10. Les autres étapes du procédé sont identiques à celles du premier mode de réalisation décrit ci-dessus.

Selon une autre variante non représentée, la microbatterie comporte une troisième électrode disposée entre l'électrolyte 5 et la seconde électrode 11. Le procédé de fabrication d'une telle microbatterie est identique au premier mode de réalisation décrit ci-dessus à l'exception du fait qu'on forme initialement un empilement 1 constitué, successivement en partant du premier substrat 2, par le premier collecteur de courant 3, la première électrode 4, l'électrolyte 5, la troisième électrode et la première couche métallique 6.

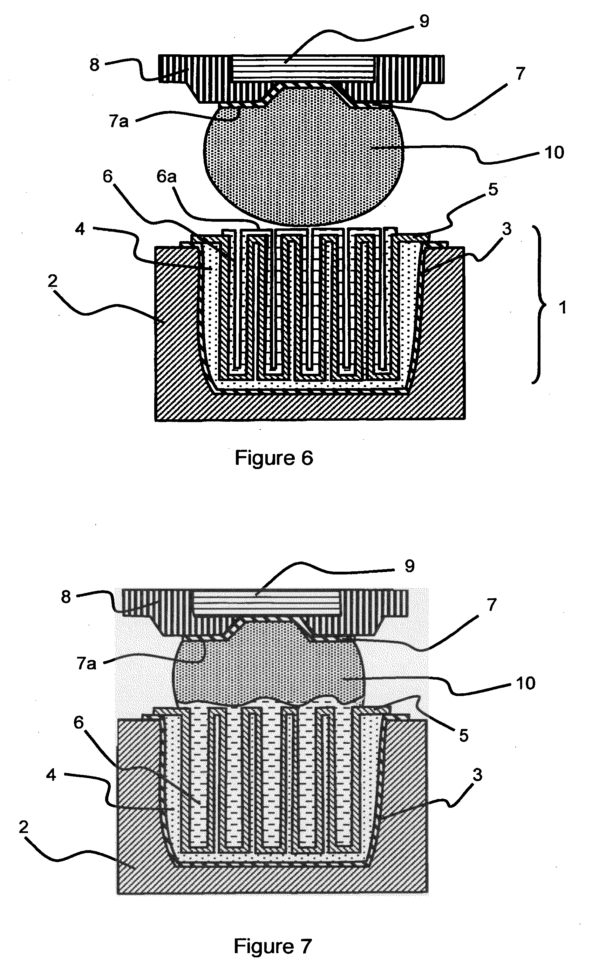

Selon un second mode de réalisation représenté aux figures 6 à 8, le procédé de fabrication d'une microbatterie est identique au premier mode de réalisation décrit ci-dessus à l'exception du fait que la microbatterie a une architecture non-planaire.

Comme représenté à la figure 6, le premier substrat 2 est texturé. On crée ainsi des motifs, par exemple des tranchées, à la surface du premier substrat 2 avant de former l'empilement 1 par dépôt successif de couches minces sur le premier substrat 2. L'empilement 1 est constitué, successivement à partir du premier substrat 2, par le premier collecteur de courant 3, la première électrode 4, l'électrolyte 5 et la première couche métallique 6. La première couche métallique 6 forme à la surface de l'empilement 1 (en haut à la figure 6) des pistes métalliques constituant la face de contact 6a.

Le second substrat 8 comporte le second collecteur de courant 7 et la bille de soudure 10 est formée de la même manière que pour le premier mode de réalisation décrit ci-dessus, sur la face de contact 7a.

Comme représenté à la figure 7, la bille de soudure 10 du second substrat 8 est alignée avec les pistes métalliques 6a puis mise en contact avec les pistes métalliques 6a.

Les premier et second substrats, respectivement 2 et 8, sont assemblés par brasage de la première couche métallique 6 et du second collecteur de courant 7, selon un procédé identique à celui décrit précédemment.

Les motifs formés dans le premier substrat 2 sont, de préférence, remplis par refusion de la bille de soudure 10 et de la première couche métallique 6 (figure 7).

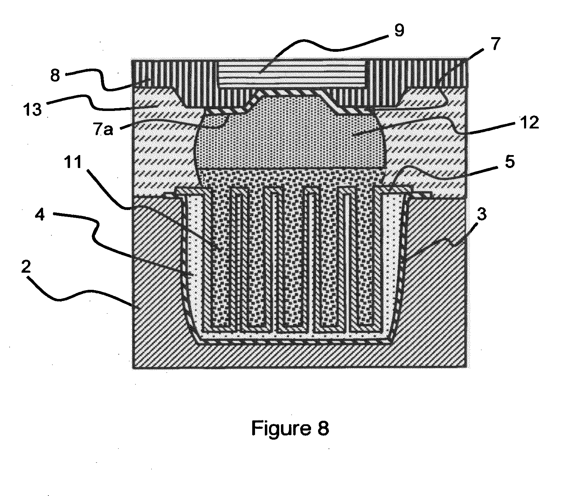

Comme représenté à la figure 8, la seconde électrode 11 est formée au cours de l'étape d'assemblage du procédé puis la microbatterie ainsi formée est encapsulée comme pour le premier mode de réalisation particulier. L'architecture non-planaire augmente les performances de la microbatterie. La texturation de la surface du premier substrat 2 permet d'augmenter la surface de contact entre l'électrolyte 5 et les première et seconde électrodes, respectivement 4 et 11. Cette conformation non-planaire favorise les échanges ioniques et, par conséquent, améliore la capacité de la microbatterie.

La présente invention ne se limite pas aux modes de réalisation décrits ci-dessus à titre d'exemples non limitatifs. En particulier, le brasage peut être réalisé au moyen de plusieurs billes de soudure 10 selon tout procédé connu.

Le procédé de fabrication selon l'invention est facile à mettre en oeuvre et compatible avec les technologies mises en oeuvre dans le domaine de la microélectronique. De façon caractéristique, le procédé de fabrication permet d'incorporer à coûts réduits une microbatterie dans un circuit intégré, pour notamment alimenter un microcomposant d'un tel circuit intégré.

Contrairement aux procédés de fabrication selon l'art antérieur, le fait de faire intervenir deux substrats dans le procédé de fabrication offre la possibilité de fabriquer des microbatteries de dimensions variées et d'accroître les possibilités de compatibilité avec les étapes de fabrication d'un circuit intégré.

Le procédé de fabrication selon l'invention fait intervenir des étapes de fabrication pouvant être mises en commun avec celles de microcomposants à intégrer dans les substrats. En outre, le procédé de fabrication permet d'envisager des modes de réalisation collectifs et une connexion entre plusieurs microbatteries.

Par ailleurs, les microbatteries selon l'invention présentent des performances électriques élevées grâce notamment à un assemblage des substrats en vis-à-vis qui induit une réduction de la longueur des pistes électriques connectant la microbatterie au microcomposant et, par conséquent, une réduction des bruits et des signaux parasites.

## Revendications

1. Microbatterie comportant un ensemble de couches minces formant, successivement, à partir d'un premier substrat (2), un premier collecteur de courant (3), une première électrode (4), un électrolyte (5), une seconde électrode (11) et un second collecteur de courant (7), ledit ensemble de couches minces est disposé entre le premier substrat (2) et un second substrat (8) **caractérisée en ce que** la seconde électrode (11) est constituée par un joint brasé et assure la connexion mécanique entre lesdits premier et second substrats (2, 8).

2. Microbatterie selon la revendication 1, **caractérisée en ce que** le second substrat (8) comporte au moins un composant électronique (9).

3. Procédé de fabrication d'une microbatterie **caractérisé en ce qu'**il comporte les étapes suivantes :
- formation d'un empilement (1) de couches minces sur un premier substrat (2) comportant, successivement à partir du premier substrat (2), un premier collecteur de courant (3), une première électrode (4), un électrolyte (5) et une première couche métallique (6),
- formation d'un second collecteur de courant (7) sur une face d'un second substrat (8) et,
- formation d'une seconde électrode (11), ladite étape de formation de la seconde électrode (11) comprenant l'assemblage desdits premier et second substrats (2, 8) par brasage de la première couche métallique (6) et du second collecteur de courant (7) au moyen d'au moins une bille de soudure (10) préalablement déposée sur une face de contact (6a) de la première couche métallique (6) ou sur une face de contact (7a) du second collecteur de courant (7), lesdits premier et second substrats (2, 8) étant disposés en vis-à-vis lors de l'assemblage.

4. Procédé selon la revendication 3, **caractérisé en ce que** le second collecteur de courant (7) comporte une seconde couche métallique munie de la face de contact (7a).

5. Procédé selon l'une des revendications 3 et 4, **caractérisé en ce que** la seconde électrode (11) est formée au cours de l'assemblage par refusion de la bille de soudure (10).

6. Procédé selon l'une quelconque des revendications 3 à 5, **caractérisé en ce que** la seconde électrode (11) est constituée par au moins un composé intermétallique issu de l'inter-diffusion d'espèces métalliques de la bille de soudure (10) et de la première couche métallique (6).

7. Procédé selon l'une quelconque des revendications 3 à 6, **caractérisé en ce que** la bille de soudure (10) est partiellement consommée lors dudit brasage de manière à former la seconde électrode (11) et une couche conductrice électrique (12) entre le second collecteur de courant (7) et la seconde électrode (11), ladite couche conductrice électrique (12) étant formée par le matériau constituant la bille métallique (10).

8. Procédé selon l'une quelconque des revendications 3 à 7, **caractérisé en ce que** la bille de soudure (10) est constituée par un matériau conducteur électrique choisi parmi les alliages d'étain, d'argent, d'indium, d'or et/ou de cuivre, de préférence, parmi les alliages SnAgCu, AuSn, Agln et SnCu.

9. Procédé selon l'une quelconque des revendications 3 à 8, **caractérisé en ce que** la première couche métallique (6) est constituée par un métal choisi parmi le cuivre, l'étain et un alliage cuivre-étain.

10. Procédé selon l'une quelconque des revendications 3 à 9, **caractérisé en ce que** la première couche métallique (6) est constituée par un empilement de couches à base de métaux et **en ce qu'**une desdites couches est munie de la face de contact (6a) destinée à être en contact avec la bille de soudure (10) et est constituée par un métal choisi parmi le cuivre, l'étain et un alliage cuivre-étain.

11. Procédé selon la revendication 10, **caractérisé en ce que** l'assemblage des premier et second substrats (2, 8) comporte la mise en contact de la bille de soudure (10) avec la première couche métallique (6) et la refusion de la bille de soudure (10) par traitement thermique.

12. Procédé selon l'une quelconque des revendications 3 à 11, **caractérisé en ce que** la première couche métallique (6) est en cuivre et la bille de soudure (10) en alliage SnAgCu et **en ce que** le traitement thermique est réalisé à une température comprise entre 170°C et 260°C.

13. Procédé selon l'une quelconque des revendications 3 à 12, **caractérisé en ce que** le second substrat (8) comporte au moins un composant électronique (9).

14. Procédé selon l'une quelconque des revendications 3 à 13, **caractérisé en ce que** l'étape de formation de la seconde électrode (11) est suivie d'une étape d'encapsulation de la microbatterie.

## Patentansprüche

1. Mikrobatterie, umfassend eine Dünnschichtanordnung, die nacheinander, ausgehend von einem ersten Substrat (2), einen ersten Stromkollektor (3), eine erste Elektrode (4), einen Elektrolyt (5), eine zweite Elektrode (11) und einen zweiten Stromkollektor (7) bildet, wobei die Dünnschichtanordnung zwischen dem ersten Substrat (2) und einem zweiten Substrat (8) angeordnet ist, **dadurch gekennzeichnet? dass** die zweite Elektrode (11) durch eine Lötnaht gebildet ist und die mechanische Verbindung zwischen dem ersten und dem zweiten Substrat (2, 8) sicherstellt.

2. Mikrobatterie nach Anspruch 1, **dadurch gekennzeichnet, dass** das zweite Substrat (8) wenigstens ein elektronisches Bauelement (9) umfasst.

3. Verfahren zur Herstellung einer Mikrobatterie, **dadurch gekennzeichnet, dass** es die folgenden Schritte umfasst:
- Ausbilden eines Stapels (1) aus dünnen Schichten auf einem ersten Substrat (2), der nacheinander, ausgehend von dem ersten Substrat (2), einen ersten Stromkollektor (3), eine erste Elektrode (4), einen Elektrolyt (5) und eine erste Metallschicht (6) umfasst,
- Ausbilden eines zweiten Stromkollektors (7) auf einer Seite eines zweiten Substrats (8) und
- Ausbilden einer zweiten Elektrode (11), wobei der Schritt des Ausbildens der zweiten Elektrode (11) das Zusammenfügen des ersten und des zweiten Substrats (2, 8) durch Löten der ersten Metallschicht (6) und des zweiten Stromkollektors (7) mittels wenigstens einer Lötmittelkugel (10), die zuvor auf einer Kontaktfläche (6a) der ersten Metallschicht (6) oder auf einer Kontaktfläche (7a) des zweiten Stromkollektors (7) abgeschieden wird, umfasst, wobei das erste und das zweite Substrat (2, 8) beim Zusammenfügen einander gegenüber angeordnet sind.

4. Verfahren nach Anspruch 3, **dadurch gekennzeichnet, dass** der zweite Stromkollektor (7) eine zweite Metallschicht, die mit der Kontaktfläche (7a) versehen ist, umfasst.

5. Verfahren nach einem der Ansprüche 3 und 4, **dadurch gekennzeichnet, dass** die zweite Elektrode (11) im Laufe des Zusammenfügens durch Aufschmelzen der Lötmittelkugel (10) gebildet wird.

6. Verfahren nach einem der Ansprüche 3 bis 5, **dadurch gekennzeichnet, dass** die zweite Elektrode (11) durch wenigstens eine intermetallische Verbindung, die aus der Interdiffusion von Metallspezies der Lötmittelkugel (10) und der ersten Metallschicht (6) entstanden ist, gebildet ist.

7. Verfahren nach einem der Ansprüche 3 bis 6, **dadurch gekennzeichnet, dass** die Lötmittelkugel (10) während des Lötens teilweise verbraucht wird, um die zweite Elektrode (11) und eine elektrisch leitende Schicht (12) zwischen dem zweiten Stromkollektor (7) und der zweiten Elektrode (11) zu bilden, wobei die elektrisch leitende Schicht (12) durch das die Metallkugel (10) bildende Material gebildet ist.

8. Verfahren nach einem der Ansprüche 3 bis 7, **dadurch gekennzeichnet, dass** die Lötmittelkugel (10) durch ein elektrisch leitendes Material, das aus den Zinn-, Silber-, Indium-, Gold- und/oder Kupferlegierungen, vorzugsweise aus den SnAgCu-, AuSn-, AgIn- und SnCu-Legierungen ausgewählt ist, gebildet ist.

9. Verfahren nach einem der Ansprüche 3 bis 8, **dadurch gekennzeichnet, dass** die erste Metallschicht (6) durch ein Metall, das aus Kupfer, Zinn und einer Kupfer-Zinn-Legierung ausgewählt ist, gebildet ist.

10. Verfahren nach einem der Ansprüche 3 bis 9, **dadurch gekennzeichnet, dass** die erste Metallschicht (6) durch einen Stapel aus Schichten auf Metallbasis gebildet ist und dass eine der Schichten mit der Kontaktfläche (6a), die dazu bestimmt ist, mit der Lötmittelkugel (10) in Kontakt zu sein, versehen ist und durch ein Metall, das aus Kupfer, Zinn und einer Kupfer-Zinn-Legierung ausgewählt ist, gebildet ist.

11. Verfahren nach Anspruch 10, **dadurch gekennzeichnet, dass** das Zusammenfügen des ersten und des zweiten Substrats (2, 8) das Inkontaktbringen der Lötmittelkugel (10) mit der ersten Metallschicht (6) sowie das Aufschmelzen der Lötmittelkugel (10) durch Wärmebehandlung umfasst.

12. Verfahren nach einem der Ansprüche 3 bis 11, **dadurch gekennzeichnet, dass** die erste Metallschicht (6) aus Kupfer besteht und die Lötmittelkugel (10) aus SnAgCu-Legierung besteht und dass die Wärmebehandlung bei einer Temperatur zwischen 170 °C und 260 °C durchgeführt wird.

13. Verfahren nach einem der Ansprüche 3 bis 12, **dadurch gekennzeichnet, dass** das zweite Substrat (8) wenigstens ein elektronisches Bauelement (9) umfasst.

14. Verfahren nach einem der Ansprüche 3 bis 13, **dadurch gekennzeichnet, dass** sich an den Schritt des Ausbildens der zweiten Elektrode (11) ein Schritt zur Verkapselung der Mikrobatterie anschließt.

## Claims

1. A microbattery comprising an assembly of thin films successively forming, starting from a first substrate (2), a first current collector (3), a first electrode (4), an electrolyte (5), a second electrode (11), and a second current collector (7), said assembly of thin films is arranged between the first substrate (2) and a second substrate (8) **characterized in that** the second electrode (11) is formed by a solder joint and ensures the mechanical connection between said first and second substrates (2, 8).

2. The microbattery according to claim 1, **characterized in that** the second substrate (8) comprises at least one electronic component (9).

3. A method for manufacturing a microbattery, **characterized in that** it comprises the following steps of:
- forming a stack (1) of thin films on a first substrate (2) comprising, in succession, starting from the first substrate (2), a first current collector (3), a first electrode (4), an electrolyte (5), and a first metal film (6),
- forming a second current collector (7) on a face of a second substrate (8), and
- forming a second electrode (11), said step of forming of the second electrode (11) comprising the assembly of said first and second substrates (2, 8) by soldering the first metal film (6) and the second current collector (7) together by means of at least one solder ball (10) previously deposited on a contact face (6a) of the first metal film (6) or on a contact face (7a) of the second current collector (7), said first and second substrates (2, 8) being placed facing each other during the assembly.

4. The method according to claim 3, **characterized in that** the second current collector (7) comprises a second metal film provided with the contact face (7a).

5. The method according to any one of claims 3 and 4, **characterized in that** the second electrode (11) is formed during the assembly by remelting of the solder ball (10).

6. The method according to any one of claims 3 to 5, **characterized in that** the second electrode (11) is made of at least one intermetallic compound resulting from the interdiffusion of metallic species from the solder ball (10) and from the first metal film (6).

7. The method according to any one of claims 3 to 6, **characterized in that** the solder ball (10) is partially consumed during said soldering so as to form the second electrode (11) and an electrically conductive film (12) between the second current collector (7) and the second electrode (11), said electrically conductive film (12) being made of the material forming the solder ball (10).

8. The method according to any one of claims 3 to 7, **characterized in that** the solder ball (10) is made of an electrically conductive material selected from among alloys of tin, silver, indium, gold and/or copper, preferably from among SnAgCu, AuSn, Agln, and SnCu alloys.

9. The method according to any one of claims 3 to 8, **characterized in that** the first metal film (6) is made of a metal selected from among copper, tin, and a copper-tin alloy.

10. The method according to any one of claims 3 to 9, **characterized in that** the first metal film (6) is made of a stack of metal-based films and **in that** one of said films is provided with the contact face (6a) intended to be in contact with the solder ball (10) and is made of a metal selected from among copper, tin, and a copper-tin alloy.

11. The method according to claim 10, **characterized in that** the assembly of the first and second substrates (2, 8) comprises placing the solder ball (10) in contact with the first metal film (6) and remelting the solder ball (10) by thermal treatment.

12. The method according to any one of claims 3 to 11, **characterized in that** the first metal film (6) is made of copper and the solder ball (10) is made of an SnAgCu alloy and **in that** the thermal treatment is carried out at a temperature ranging between 170°C and 260°C.

13. The method according to any one of claims 3 to 12, **characterized in that** the second substrate (8) comprises at least one electronic component (9).

14. The method according to any one of claims 3 to 13, **characterized in that** the step of forming of the second electrode (11) is followed by a step of encapsulation of the microbattery.
